Europäisches Patentamt

European Patent Office

Office européen des brevets

Publication number: **0 290 075**
**A2**

# EUROPEAN PATENT APPLICATION

(21) Application number: 88200766.9

(51) Int. Cl.⁴ **C07F 9/50**

(22) Date of filing: 20.04.88

(30) Priority: 08.05.87 NL 8701086

(43) Date of publication of application:
09.11.88 Bulletin 88/45

(84) Designated Contracting States:
**BE DE FR GB IT NL**

(71) Applicant: SHELL INTERNATIONALE
RESEARCH MAATSCHAPPIJ B.V.
Carel van Bylandtlaan 30
NL-2596 HR Den Haag(NL)

(72) Inventor: **Van Doorn, Johannes Adrianus**
**Badhuisweg 3**
**NL-1031 CM Amsterdam(NL)**
Inventor: **Meijboom, Nicolaas**
**Badhuisweg 3**
**NL-1031 CM Amsterdam(NL)**

(74) Representative: Aalbers, Onno et al
P.O. Box 302
NL-2501 CH The Hague(NL)

(54) **Novel diaryl phosphides.**

(57) Novel alkali metal diaryl phosphides of the general formula $(R_{11})_2PM$, wherein M represents an alkali metal and $R_{11}$ is an aryl group having one or more polar substituents which, in respect to the phosphorus atom, occupy the para position and in addition to this position can occupy no other position than either one or both of the meta positions.

EP 0 290 075 A2

# NOVEL DIARYL PHOSPHIDES

The invention relates to novel diaryl phosphides which are eligible for use as starting materials in the preparation of tetraaryl diphosphines. The latter compounds find use as components in catalyst compositions intended for the preparation of polymers of carbon monoxide with one or more olefinically unsaturated compounds.

High molecular weight linear polymers of carbon monoxide with one or more olefinically unsaturated compounds (for the sake of brevity referred to as A) in which the monomer units occur in alternating order and which polymers therefore consist of units of the general formula $-CO-(A')-$, wherein $A'$ represents a monomer unit derived from a monomer A used, can be prepared by using catalyst compositions based upon:

a) a palladium compound,

b) an anion of an acid with a pKa of less than 6, and

c) a tetraaryl diphosphine of the general formula $R_1 R_2 P-R-PR_3 R_4$, wherein $R_1-R_4$ represent similar or different aromatic hydrocarbon groups and R is a bivalent bridging group containing at least two carbon atoms in the bridge.

Diphophines which can very suitably be used as the component c) in the catalyst compositions are diphosphines in which the groups $R_1$, $R_2$, $R_3$ and $R_4$ are similar to one another and which therefore can be represented by the general formula $(R_1)_2P-R-P(R_1)_2$. The preparation of the latter diphosphines can be carried out either by the reaction of an alkali metal diaryl phosphide $(R_1)_2PM$ with a dihalo compound X-R-X, or by the reaction of an aryl alkali metal compound $R_1M$ with a tetrahalo diphosphine $X_2P-R-PX_2$. For instance, 1,3-bis(diphenyl-phosphino) propane can be prepared either by the reaction of $(C_6H_5)_2PNa$ with Cl-$(CH_2)_3$-Cl, or by the reaction of $C_6H_5Li$ with $Cl_2P$-$(CH_2)_3$-$PCl_2$. In view of the simple one-stage synthesis leading to the phosphorus-containing starting material for the former method of preparation, viz. by reaction in liquid ammonia of an alkali metal M with a triaryl phosphine $(R_1)_3P$, and the very cumbersome multi-stage synthesis to the phosphorus-containing starting material for the latter method of preparation, the former method of preparation is much to be preferred.

In the past, the Applicant has carried out an investigation into the catalyst compositions mentioned hereinbefore. This investigation has shown that their performance can be considerably enhanced by the incorporation of a diphosphine of the general formula $R_5 R_6 P-R-PR_7 R_8$, wherein $R_5$, $R_6$, $R_7$ and $R_8$ represent similar or different aromatic hydrocarbon groups which may or may not be substituted with polar groups, with the proviso that at least one of groups $R_5$, $R_6$, $R_7$ and $R_8$ contains at least one polar substituent. and wherein R has the meaning given hereinbefore. Diphosphines which can very suitably be used as the components c) in the catalyst compositions are diphosphines in which the groups $R_5$, $R_6$, $R_7$ and $R_8$ are similar to one another and which therefore can be represented by the general formula $(R_5)_2P$-R-$P(R_5)_2$, wherein $R_5$ is a polar-substituted aromatic hydrocarbon group. Comparison of the performances of catalyst compositions containing a diphosphine of the general formula $(R_1)_2P$-R-$P(R_1)_2$ as component c) with corresponding catalyst compositions which contain a diphosphine of the general formula $(R_5)_2P$-R-$P(R_5)_2$ as component c) shows that at similar reaction rates for both compositions, the compositions having a polar-substituted diphosphine afford polymers with higher molecular weights and, alternatively, that when the two compositions are employed for preparing polymers with equal molecular weights, the compositions containing a polar-substituted diphosphine lead to higher reaction rates.

The Applicant has carried out an investigation into the preparation of polar-substituted diphosphines of the general formula $(R_5)_2P$-R-$P$-$(R_5)_2$. Since neither for the polar-substituted diphosphines of the general formula $(R_5)_2P$-R-$P$-$(R_5)_2$, nor for the non-polar-substituted diphosphines of the general formula $(R_1)_2P$-R-$P$-$(R_1)_2$ the preparation by reacting an aryl alkali metal compound with a tetrahalo diphosphine is a very attractive method on account of the very cumbersome multi-stage synthesis of the required phosphorus-containing starting materials, the investigation carried out by the Applicant was directed at the method mentioned earlier for the preparation of non-polar-substituted diphosphines, by reacting an alkali metal diaryl phosphide with a dihalo compound.

As was stated hereinbefore in the discussion of the preparation of non-polar-substituted diphosphines. the phosphorus-containing starting materials required for the synthesis thereof can be simply obtained by the reaction in liquid ammonia of an alkali metal M with a triaryl phosphine $(R_1)_3P$. The investigation has shown that this method is suited both for the preparation of alkali metal diaryl phosphides in which the aryl groups bear no substituents, such as sodium diphenyl phosphide, and for the preparation of alkali metal diaryl phosphides in which the aryl groups bear non-polar substituents, such as methyl groups. Examples of such alkali metal diaryl phosphides are sodium di(orto-tolyl) - phosphide, sodium di(meta-tolyl) phosphide and sodium di(para-tolyl) phosphide. It was seen that in comparison with the preparation of sodium diphenyl phosphide from triphenyl phosphine, in which a quantitative conversion can be reached, the yields in which the corresponding preparation of diaryl phosphides whose aryl groups contain one or more non-polar substituents normally proceeds, are lower, but they are still amply sufficient for this method of preparation to be used on a technical scale. To prepare tetraaryl diphosphines in which the aryl groups contain one or more polar substituents, investigation of the application of the above method has shown that no or hardly any conversion of the polar-substituted triaryl phosphines occurs upon metal addition. It was found for instance that the formation of the alkali metal diaryl phosphides was completely suppressed by the presence of certain polar groups, such as a N,N-dialkyl amino-group, in a position para to phosphorus. The presence of other polar groups, such as an alkoxy group, in a para position in respect to phosphorus led to the formation of alkali metal diaryl phosphide proceeding in a low yield. Likewise, it holds for the presence of two or three polar substituents in the aryl groups that the position in which the polar substituents are found in respect to phosphorus is of great importance for the successful preparation of the alkali metal diaryl phosphide. It appeared for instance that the presence of two alkoxy groups in ortho positions in respect to phosphorus sufficed for the formation of the alkali metal diaryl phosphide to proceed in a low yield, whilst the presence of an additional third alkoxy group in a para position in respect to phosphorus led to complete blockage of the formation of alkali metal diaryl phosphide. Nor did any formation of alkali metal diaryl phosphide occur when two methoxy groups were present in ortho and para positions in respect to phosphorus.

Surprisingly, the Applicant found that polar-substituted triaryl phosphines can be divided into two classes on the basis of their suitability to serve as starting material for the preparation of alkali metal diaryl phosphides by their reaction in liquid ammonia with an alkali metal, viz.:

I. Polar-substituted triaryl phosphines from which the corresponding alkali metal diaryl phosphides can be prepared in high to very high, sometimes even quantitative, yields, and

II. Polar-substituted triaryl phosphines from which the corresponding alkali metal diaryl phosphides can only be prepared in poor to very poor yields and sometimes cannot even be produced at all.

Furthermore, the Applicant found that with regard to the position of the polar substituents in respect to the phosphorus atom. the afore-mentioned two classes of polar-substituted triaryl phosphines can be defined as follows:

I. Triaryl phosphines of the general formula $(R_9)_3P$. wherein $R_9$ represents an aryl group containing one or more polar substituents. which polar substituents can occupy no other positions in respect to the phosphorus atom than the two meta positions and one of the ortho positions. and

II. Triaryl phosphines of the general formula $(R_{10})_3P$. wherein $R_{10}$ represents an aryl group containing one or more polar substituents, one of which occupies the para position and/or two of which occupy the two ortho positions.

Further research carried out by the Applicant into the preparation of alkali metal diaryl phosphides of the general formula $(R_{10})_2PM$ by the reaction in liquid ammonia of an alkali metal M with a triaryl phosphine has now surprisingly shown that a number of these alkali metal diaryl phosphides of the general formula $(R_{11})_2PM$ can be obtained in considerably higher yields when the triaryl phosphine of the general formula $(R_{11})_3P$ which was originally used as the starting material is replaced by a triaryl phosphine of the general formula $(R_{11})_2(R_{12})P$, in which general formula $R_{11}$ represents an aryl group containing one or more polar substituents which occupy the para position in respect to the phosphorus atom and which can further occupy no other positions than either one or both of the meta positions and wherein $R_{12}$ is an aryl group in which there occurs no polar substituent occupying the para position in respect to the phosphorus atom.

Alkali metal diaryl phosphides of the general formula $(R_{11})_2PM$ are novel compounds and are the solution to the problem of the preparation of tetraaryl diphosphines in which the aryl groups contain one or more polar substituents.

The present patent application therefore relates to novel alkali metal diaryl phosphides of the general formula $(R_{11})_2PM$ wherein M represents an alkali metal and $R_{11}$ has the meaning indicated hereinbefore.

Examples of these novel alkali metal diaryl phosphides are sodium di(4-methoxyphenyl) phosphide and sodium di(4-(N,N-dimethylamino)-phenyl) phosphide.

The patent application further relates to the preparation of the novel alkali metal diaryl phosphides by the reaction in liquid ammonia of an alkali metal M with a triaryl phosphine of the general formula $(R_{11})_2(R_{12})P$, in which $R_{11}$ and $R_{12}$ have the meanings given hereinbefore.

The alkali metal diaryl phosphides of the general formula $(R_{11})_2PM$ according to the invention are intended in the first place for use as starting materials for the preparation of tetraaryl diphosphines of the general formula $(R_{11})_2P-R-P-(R_{11})_2$, viz. tetraaryl diphosphines in which the four aryl groups are similar to one another. To this end, the alkali metal diaryl phosphides can be reacted with a dihalo compound of the general formula X-R-X, wherein X represents chlorine or bromine. Furthermore, the alkali metal diaryl phosphides of the general formula $(R_{11})_2PM$ according to the invention are suitable for use as the starting materials for the preparation of tetraaryl diphosphines of the general formula $(R_{11})_2P-R-P(R_{13})(R_{14})$, wherein $R_{13}$ and $R_{14}$ represent similar or different aryl groups which may contain polar substituents. To this end, the alkali metal diaryl phosphides can be reacted with a monohalo compound of the general formula $X-R-P(R_{13})(R_{14})$. The tetraaryl diphosphines of the general formula $(R_{11})_2P-R-P-(R_{13})(R_{14})$, wherein either one of the aryl groups $R_{13}$ and $R_{14}$ may optionally be similar to $R_{11}$, are novel compounds. The present patent application also relates to the afore-mentioned tetraaryl diphosphines of the general formula $(R_{11})_2P-R-P-(R_{13})(R_{14})$ wherein either one of the aryl groups $R_{13}$ and $R_{14}$ may optionally be similar to $R_{11}$, as novel compounds.

The present patent application further relates to novel catalyst compositions based upon

a) a palladium compound,

b) an anion of an acid with a pKa of less than 6, and

c) one of the tetraaryl diphosphines prepared in the manner described hereinbefore.

Finally, the present patent application relates to the use of these novel catalyst compositions in the preparation of polymers of carbon monoxide with one or more olefinically unsaturated compounds, as well as to the polymers thus prepared and to shaped objects consisting at least partly of these polymers.

The alkali metal diaryl phosphides of the general formula $(R_{11})_2PM$ can be prepared starting from triaryl phosphines of the general formula $(R_{11})_2(R_{12})P$. Preferably, the aryl groups $R_{11}$ and $R_{12}$ in the general formulae are phenyl groups. If the polar-substituted aryl group $R_{11}$ is a phenyl group, it can contain at most three polar substituents. Depending on their number, the polar substituents may be attached to the phenyl group in the following arrangement (with the phosphorus occupying the 1-position). When a single polar substituent is present, this substituent must necessarily occupy the 4-position. When two polar substituents are present, these must occupy the 3-position and the 4-position. When three polar substituents are present, these must occupy the 3-, 4- and 5-positions. If the aryl group $R_{12}$ is a polar-substituted phenyl group, it may contain at most four polar substituents. If a single polar substituent

is present in $R_{12}$, it may occupy the 2-position or the 3-position. If two polar substituents are present in $R_{12}$, these may occupy the 2-and 3-positions. the 2-and 5-positions, the 2-and 6-positions or the 3-and 5-positions. If three polar substituents are present in $R_{12}$, these may occupy the 2-, 3-, and 5-positions or the 2-, 3-, and 6-positions. If four polar substituents are present in $R_{12}$, these will have to occupy the 2-, 3-, 5-and 6-positions. $R_{12}$ is preferably a polar-substituted phenyl group having one, and more in particular two, polar substituents in positions ortho to the phosphorus atom. If the polar-substituted aryl group $R_{11}$ contains two or three polar substituents, these polar substituents may be similar or different. Preference is given to similar polar substituents. This equally holds for the aryl group $R_{12}$ when it contains two or more polar substituents. In addition to one or more polar substituents, the aryl groups $R_{11}$ and $R_{12}$ may also include non-polar substituents, such as alkyl groups and in particular methyl groups. Eligible polar substituents include N,N-dialkylamino groups, such as N,N-dimethylamino groups and alkoxy groups, such as methoxy and tert.butoxy groups. The preferred polar substituents present in the aryl groups $R_{11}$ and $R_{12}$ are alkoxy groups, and more in particular, methoxy groups.

The preparation of the alkali metal diaryl phosphides according to the invention is carried out by the reaction in liquid ammonia of an alkali metal M with a triaryl phosphine. Alkali metals that may be used are lithium, potassium and sodium. Preference is given to the use of sodium as the alkali metal. It is preferred to employ 2 mol of alkali metal per mol of triaryl phosphine to be converted. The quantity of liquid ammonia may vary within wide ranges. It is preferred to employ 1 to 125 ml and in particular 10 to 40 ml of liquid ammonia per mmol of alkali metal. In view of the fact that liquid ammonia boils at atmospheric pressures at about -33°C, the process, if carried out at an atmospheric pressure, should be carried out below -33°C. Preferably, the process is carried out at a temperature of from -100 to -35°C and in particular of from -80 to -35°C. If the process of the invention is carried out under pressure, temperatures above -33°C may be employed, if desired.

As stated hereinbefore, the alkali metal diaryl phosphides according to the invention are of interest for their use as starting materials in the preparation of tetraaryl diphosphines, which can be used as components of catalyst compositions intended for the preparation of polymers of carbon monoxide with one or more olefinically unsaturated compounds. A number of the tetraaryl diphosphines that can be prepared from the present alkali metal diaryl phosphides are novel compounds. This is the case with compounds of

the general formula $(R_{1\cdot})_2P\text{-}R\text{-}P(R_{13})(R_{14})$.

As was stated hereinbefore, the present patent application also relates to novel catalyst compositions for the preparation of polymers of carbon monoxide with one or more olefinically unsaturated compounds, which catalyst compositions are based upon

a) a palladium compound,

b) an anion of an acid with a pKa of less than 6, and

c) one of the tetraaryl diphosphines prepared in the manner described hereinbefore.

The palladium compound employed in the catalyst compositions as the component a) is preferably a palladium salt of a carboxylic acid and in particular palladium acetate. The component b) used in the catalyst compositions is preferably an anion of an acid with a pKa of less than 4 (determined in aqueous solution at 18°C) and in particular an anion of an acid with a pKa of less than 2. More specifically preferred is an anion of a sulphonic acid, such as para-toluenesulphonic acid or an anion of a carboxylic acid, such as trifluoro acetic acid. Component b) can be incorporated in the catalyst compositions in the form of an acid and/or in the form of a salt. Eligible salts include non-noble transition metal salts, such as copper salts. The component c) that is preferably used in the catalyst compositions is a tetraaryl diphosphine in which the bivalent bridging group R is a $-(CH_2)_3-$ group. If desired, components a) and b) can be used combined in a single compound. An example of such a compound is the complex $Pd(CH_3CN)_2\text{-}(O_3S\text{-}C_6H_4\text{-}CH_3)_2$, which can be prepared by the reaction of palladium chloride with the silver salt of para-toluenesulphonic acid in acetonitrile as the solvent. In addition to the components a), b) and c), the catalyst compositions may also include promoters. For this purpose, a 1,4-quinone and in particular a 1,4-naphthoquinone, is used by preference.

Eligible olefinically unsaturated compounds which can be polymerized with carbon monoxide by using the catalyst compositions described hereinbefore are both compounds which consist exclusively of carbon and hydrogen and compounds which, in addition to carbon and hydrogen, contain one or more hetero atoms. Preference is given to the preparation of polymers of carbon monoxide with one or more olefinically unsaturated hydrocarbons. Examples of suitable hydrocarbon monomers are ethene and other α-olefins, such as propene, butene-1, hexene-1 and octene-1. The catalyst compositions of the invention are particularly suited to be used for the preparation of copolymers of carbon monoxide with ethene and for the preparation of terpolymers of carbon monoxide with ethene and another olefinically unsaturated hydrocarbon, such as propene. The polymerization is preferably carried out at a temperature of 20-200°C and a pressure of 1-200 bar and in particular at a temperature of 30-150°C and a pressure of 20-100 bar. The polymerization is typically carried out by contacting the monomers with a solution of the catalyst composition in an organic liquid in which the polymers are insoluble. If desired, the polymerization may be carried out in the gaseous phase.

The invention is now illustrated with the aid of the following examples.

Example 1

Sodium di(4-methoxyphenyl) phosphide was prepared as follows. To 100 ml of liquid ammonia present in a mechanically stirred reaction vessel which was kept at -78°C by cooling, were successively added 8 mmol of sodium and 4 mmol of tri-(4-methoxyphenyl) phosphine. After 4 hours, 4 mmol of ammonium chloride was added to the reaction mixture. After 15 minutes the ammonia was evaporated away. Analysis of the residue obtained showed that 2% of the tri(4-methoxyphenyl) phosphine had been converted into sodium di(4-methoxyphenyl) phosphide.

Example 2

Example 1 was substantially repeated, except that instead of tri(4-methoxyphenyl) phosphine, tri-(4-(N,N-dimethylamino)phenyl) phosphine was used. It appeared that no conversion of tri(4-(N,N-dimethylamino)phenyl) phosphine into sodium di(4-(N,N-dimethylamino)phenyl) phosphide had taken place.

Example 3

Example 1 was substantially repeated, except that instead of tri(4-methoxyphenyl) phosphine, di-(2,4-dimethoxyphenyl),phenyl phosphine was used. It appeared that no conversion of di(2,4-dimethoxyphenyl),phenyl phosphine into sodium di(2,4-dimethoxyphenyl) phosphide had taken place.

## Example 4

Sodium di(4-methoxyphenyl) phosphide was prepared substantially in the same way as in Example 1, the difference being that instead of tri(4-methoxyphenyl) phosphine, di(4-dimethoxyphenyl),phenyl phosphine was used. 4% of the di(4-dimethoxyphenyl),phenyl phosphine was found to have been converted into sodium di(4-methoxyphenyl) phosphide.

## Example 5

Sodium di(4-methoxyphenyl) phosphide was prepared substantially in the same way as in Example 1, the difference being that instead of tri(4-methoxyphenyl) phosphine, di(4-methoxyphenyl),2-methoxyphenyl phosphine was used. Of the di(4-methoxyphenyl),2-methoxyphenyl phosphine, 77% was found to have been converted into sodium di-(4-methoxyphenyl) phosphide.

## Example 6

Sodium di(4-methoxyphenyl) phosphide was prepared substantially in the same way as in Example 1, the difference being that instead of tri(4-methoxyphenyl) phosphine, di(4-methoxyphenyl),2,6-dimethoxyphenyl phosphine was used. The di-(4-methoxy phenyl),2,6-dimethoxyphenyl phosphine was found to have been converted into sodium di-(4-methoxyphenyl) phosphide quantitatively.

## Example 7

Sodium di(4-(N,N-dimethylamino)phenyl) phosphide was prepared substantially in the same way as the sodium di(4-methoxyphenyl) phosphide of Example 1, the difference being that instead of tri(4-methoxyphenyl)phosphine, di(4-(N,N-dimethylamino)phenyl), - phenyl phosphine was used. 5% of the di(4-(N,N-dimethylamino)phenyl),phenyl phosphine was found to have been converted into sodium di(4-(N,N-dimethylamino)phenyl) phosphide. 52% of the starting di(4-(N,N-dimethylamino)phenyl), phenyl phosphine was found to have remained unconverted, whereas 43% had been converted into 1-di(4-(N,N-dimethylamino)phenyl) phosphino,2,5-cyclohexadiene. The latter compound is a novel tertiary phosphine.

Of Examples 1-7, Examples 4-7 are examples according to the invention. In these examples alkali metal diaryl phosphides of the general formula $(R_{1\cdot})_2PNa$ were prepared by the reaction in liquid ammonia of sodium with a triaryl phosphine of the general formula $(R_{\cdot\cdot})_2(R_{\cdot 2})P$. Examples 1-3 lie outside the scope of the invention. They have been included in the patent application for comparison. In Examples 1 and 2, the starting materials employed were triaryl phosphines of the general formula $(R_{11})_3P$ instead of triaryl phosphines of the general formula $(R_{1\cdot})_2(R_{\cdot 2})P$ as proposed herein. Although in Example 3 the starting material employed was a triaryl phosphine which, in addition to two similar polar-substituted aryl groups, contained an aryl group $R_{12}$, the two similar aryl groups did not satisfy the definition of $R_{1\cdot}$. The favourable effect which the substitution of one of the aryl groups $R_{11}$ in the triaryl phosphines $(R_{11})_3P$ with an aryl group $R_{12}$ had on the yield of alkali metal diaryl phosphide is clearly demonstrated by the comparison of the results of Examples 4, 5 and 6 with the result of Example 1 and by the comparison of the result of Example 7 with the result of Example 2.

The triaryl phosphines di(4-methoxyphenyl), 2-methoxyphenyl phosphine and di(4-methoxyphenyl),2,6-dimethoxyphenyl phosphine used as starting materials in Examples 5 and 6 are novel compounds. They can be prepared by known methods of preparing related triaryl phosphines, for instance by the reaction of di(4-methoxyphenyl)-phosphorus chloride with either 2-methoxyphenyl magnesium bromide or 2,6-dimethoxyphenyl lithium.

## Claims

1. Novel alkali metal diaryl phosphides of the general formula $(R_{11})_2PM$, wherein M represents an alkali metal and $R_{11}$ is an aryl group having one or more polar substituents which, in respect to the phosphorus atom, occupy the para position and in addition to this position can occupy no other position than either one or both of the meta positions.

2. Alkali metal diaryl phosphides as claimed in claim 1, characterized in that $R_{11}$ is a polar-substituted phenyl group.

3. Alkali metal diaryl phosphides as claimed in claims 1 or 2, characterized in that $R_{11}$ contains one or more alkoxy groups, such as methoxy groups, or one or more dialkyl-amino groups, such as dimethyl-amino groups.

4. Alkali metal diaryl phosphides as claimed in one or more of claims 1-3, characterized in that they contain sodium as the alkali metal.

5. As novel alkali metal diaryl phosphides as claimed in claim 1, sodium di(4-methoxyphenyl) phosphide, and
sodium di(4-(N,N-dimethylamino)phenyl) phosphide.

6. Process for the preparation of alkali metal diaryl phosphides as claimed in one or more of claims 1-5, characterized in that the preparation is carried out by the reaction in liquid ammonia of an alkali metal M with a triaryl phosphine of the general formula $(R_{11})_2(R_{12})P$, in which general formula $R_{12}$ represents an aryl group in which there occurs no polar substituent occupying a para position in respect to the phosphorus atom.

7. Process as claimed in claim 6, characterized in that $R_{12}$ is a phenyl group which may or may not be polarly substituted.

8. Process as claimed in claim 7 or 8, characterized in that when $R_{12}$ contains two or more polar substituents, these are similar to one another.

9. Process as claimed in one or more of claims 7-9, characterized in that $R_{12}$ is a 2-methoxyphenyl group or a 2,6-dimethoxyphenyl group.

10. Process as claimed in one or more of claims 7-10, characterized in that, per mmol of triaryl phosphine to be converted, 2 mmol of alkali metal is used; 2-250 ml of liquid ammonia is used and the reaction is carried out at a temperature of from -100 to -35 °C.

11. Process as claimed in claim 10, characterized in that, per mmol of alkali metal, 10-40 ml of liquid ammonia is used.

12. Novel tetraaryl diphosphines of the general formula $(R_{11})_2P-R-P(R_{13})(R_{14})$, wherein $R_{11}$ represents an aryl group containing one or more polar substituents which, in respect to the phosphorus atom to which $R_{11}$ is bound, occupy the para position and in addition to this position can occupy no other position than either one or both of the two meta positions, and wherein $R_{13}$ and $R_{14}$ represent similar of different aryl groups which may contain polar substituents one of which may optionally be similar to $R_{11}$, and wherein R represents a bivalent bridging group containing at least two carbon atoms in the bridge.

13. As novel tertiary phosphines di(4-methoxyphenyl), 2-methoxyphenyl phosphine, di(4-methoxyphenyl), 2,6-methoxyphenyl phosphine, and 1-di(4-(N,N-dimethylamino)phenyl)phosphino, 2,5-cyclohexadiene.